(19) Europäisches Patentamt / European Patent Office / Office européen des brevets

(11) **EP 4 296 102 B1**

(12) **EUROPEAN PATENT SPECIFICATION**

(45) Date of publication and mention of the grant of the patent:
**08.07.2026  Bulletin 2026/28**

(21) Application number: **22749294.9**

(22) Date of filing: **27.01.2022**

(51) International Patent Classification (IPC):
**B60K 7/00** *(2006.01)*      **B60K 17/342** *(2006.01)*
**B60K 17/04** *(2006.01)*

(52) Cooperative Patent Classification (CPC):
**B60K 7/0007; B60K 17/046; B60K 17/342;**
B60K 2007/0061; Y02T 10/62

(86) International application number:
**PCT/ES2022/070036**

(87) International publication number:
**WO 2022/167709 (11.08.2022 Gazette 2022/32)**

(54) **PENDULAR POWER TRANSMISSION DRIVE WHEEL WITH MECHANICAL RECOVERY OF PART OF THE BRAKING ENERGY**

ANTRIEBSRAD MIT PENDELKRAFTÜBERTRAGUNG MIT MECHANISCHER RÜCKGEWINNUNG EINES TEILS DER BREMSENERGIE

ROUE MOTRICE À TRANSMISSION PAR PENDULE AVEC  RÉCUPÉRATION MÉCANIQUE D'UNE PARTIE DE L'ÉNERGIE DE FREINAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **02.02.2021  ES 202130086**

(43) Date of publication of application:
**27.12.2023   Bulletin 2023/52**

(73) Proprietor: **Lahuerta Romeo, Manuel**
**50830 Las Lomas del Galleg (ES)**

(72) Inventor: **Lahuerta Romeo, Manuel**
**50830 Las Lomas del Galleg (ES)**

(74) Representative: **Fernández-Pacheco, Aurelio Fernández**
**Lerroux**
**C/ Proción, 7 -América II 2-2°D**
**28023 Madrid (ES)**

(56) References cited:
**FR-A5- 2 071 264**      **US-A- 6 139 464**
**US-A1- 2009 133 944**   **US-A1- 2011 232 984**
**US-A1- 2012 248 850**   **US-A1- 2015 375 613**
**US-B1- 6 540 632**

**Description**

## OBEJECT OF THE INVENTION

The invention, as expressed in its statement, relates to a pendulum power transmission drive wheel with mechanical recovery of part of the braking energy, driven by a pendulum power transmission, capable of mechanically storing and restoring the braking energy through a pendulum mechanism, which then allows it to start the vehicle smoothly, requiring less starting torque from the motor. This means the use of smaller motors with less energy consumption and, therefore, less pollutants. The technical goal of the present invention is to ensure that the driving force reaches the wheel by the shortest path and in the smoothest way.

Vehicles equipped with this technology will be suitable for use on circuits with frequent stops and starts, as is the case with city buses.

The aim is to achieve vehicles for urban transport that need less power to accelerate and, due to their lightness, exert less specific pressure on the pavement, providing more driving comfort for passengers and resulting in cleaner and quieter cities.

## FIELD OF APPLICATION

The field of application of the present invention is is the traction systems for land vehicles operating under frequent stop-start cycles, such as urban buses, delivery vehicles, waste collection fleets, or shuttle vehicles, among others, where the management and utilization of energy associated with braking and starting phases is relevant, with the aim of improving energy efficiency and reducing the mechanical stresses on the drive system

## BACKGROUND OF THE INVENTION

The electric vehicle represents the future of urban transport. Many manufacturers adapt more or less original solutions by offering a wide range of electric-only or hybrid vehicles, which help to alleviate the problem of pollution generated by city transport.

Usually, city busses have a motor, clutch, gearbox, transmission and differential, with the sole purpose of bringing power to the shaft of the drive wheels that, in contact with the ground, move the vehicle.

Achieving buses with less inertia, which are capable of starting with low motor torques due to having additional potential energy in the pendulum, based on less overloaded structures (chassis), is the object of the present invention.

Closest prior art D1: FR 2 071 264 A5 (Pernin, 1971) discloses a hydraulically driven axle comprising a housing with gear trains, hydraulic motors and clutches, differential options and suspension/stabiliser linkages. The wheels are driven from gear trains and hydraulic motors housed in the axle, and the axle is mounted to a chassis/suspension through articulated elements. D1 does not disclose a pendulum assembly with a swing arm articulated about the reducer input axis with a motor at the arm end, nor brake calipers on the arm acting on a brake disc integral with the reducer housing to retain and release the pendulum for mechanical storage and recovery of braking energy.

Other prior art D2: US 2012/0248850 A1 (Hirano) relates to an in-wheel motor device with a motor on a secondary axis parallel to the wheel axis and a planetary reducer on the wheel axis. No pendulum arm with a motor at its end and no calipers on the arm for mechanical storage/release are disclosed.

D3: US 2011/0232984 a1 (Wurm) discloses a compact drivetrain with large gears which can store kinetic energy and produce gyroscopic effects. It does not disclose a pendulum swing arm articulated about the reducer input axis with a motor at the end, nor arm-mounted calipers acting on a disc integral with the reducer housing for mechanical energy storage and release.

## DESCRIPTION OF THE INVENTION

Usually, city buses have a motor, clutch, gearbox, transmission and differential, with the sole purpose of bringing power to the shaft of the drive wheels that, in contact with the ground, move the vehicle.

The technical goal of the invention is to ensure that the power reaches the wheel by the shortest path and in the smoothest way.

The above problems are solved by the present invention, which is defined in claim 1.

The present invention places all power transmission components directly on the drive wheel shaft and not on the chassis.

City buses are vehicles that are constantly starting and stopping, achieving an average speed of about 12 Km/h.

Hence, for frequent starting and stopping the power is mainly spent on accelerating the mass of the bus.

It is therefore necessary to have the weight where it contributes to traction, that is, at the drive wheels, and it is desirable to reduce the overall weight in order to minimise inertia, and thus power and fuel consumption.

In the present invention, the motor and transmission weights are located on the drive wheel shaft, contributing to improved traction even when the vehicle is empty.

On the other hand, as it does not need to support the torques due to the motor and the transmission the chassis can be lighter.

Currently, an empty city bus weights about 13t to transport 50 people of 75Kg, that is 3.75t with a tare/load ratio=3.33

With the present invention, a tare of 5t could be achieved for transporting the same 50 people, that is a tare/load ratio =1.33

Another way of transmitting power to the wheel shaft in a progressive manner is to use a swinging pendulum acting as a lever arm to transmit the torque to the drive wheel; as defined in the present invention.

If the rotation axis of the pendulum is concentric to the input shaft of the epicyclic reducer, the input torque caused by the pendulum will become a greater torque on the output shaft of the reducer where the wheel is located, transmitting it to the wheel.

A motor delivers its mechanical power with a low torque at high revolutions; on the other hand, the drive wheel needs a high torque at low revolutions, hence the best link between the two is an epicyclic reducer which is designed with its shafts coaxially arranged. Therefore, this arrangement is the most suitable for this implementation, as demonstrated in the present invention.

On the other hand, the pendulum is the most sensitive mechanism, as is can oscillate with small forces that unbalance it, hence it is an ideal mechanism to locate the motor so that a lower torque is required when starting it.

As the pendulum rises the reaction torque increases, progressively delivering it through the epicyclic reducer, to the wheel, until said pendulum torque overcomes the reaction torque of the wheel and the vehicle starts. In the braking process, the motor will act as a generator and the pendulum will rise in the opposite direction on the direction of travel.

In turn, the pendulum allows potential energy to be converted into kinetic energy when descending and vice versa. It is therefore a suitable mechanism for mechanically storing braking energy as it rises as a result of the reaction torque exerted by the motor brake and maintains this position by means of the brake calipers located on the pendulum swing arm acting on a brake disc integral with the reducer housing.

The driver will keep the brake activated (pendulum raised) while the bus is topped, deactivating it to start, which will cause the pendulum to descend in the direction of travel, delivering its potential energy to the wheel, thus recovering a good part of the braking energy.

The mechanism described perfectly solves the problem of vehicles with frequent starts an stops, which travel at moderate speeds.

## DESCRIPTION OF THE DRAWINGS

In order to complement the description being made and in order to assists in a better understanding of the features of the invention, a set of drawings is attached to this specification, as an integral part thereof, in which the following is illustrated for illustrative and non-limiting purposes:

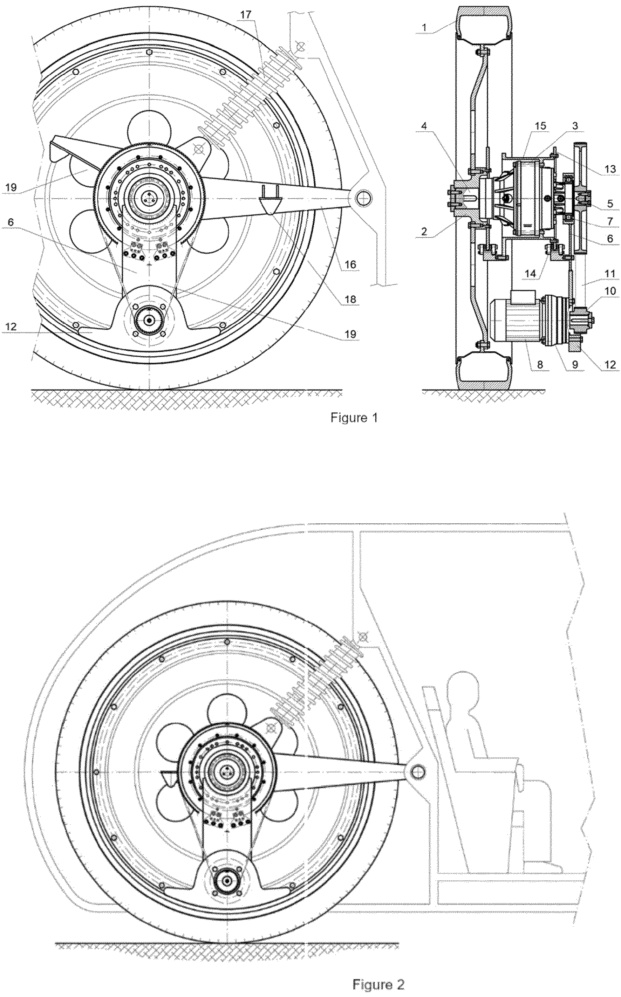

Figure 1 .- Shows an elevational view and profile of a drive wheel assembly coupled to the suspension of a vehicle as an example of a preferred embodiment of the claimed invention, showing the main elements that compose it, marked and described as follows:

1) Wheel with its rim and disc.
2) Wheel hub integral with the reducer output shaft.
3) Epicyclic reducer with its coaxial shaft (output and input).
4) Reducer output shaft.
5) Reducer input shaft, where the pendulum transmission engages.
6) Pendulum swing arm.
7) Bearing on a coaxial input-shaft stub the swing arm.
8) Motor located at the end of the pendulum swing arm.
9) Coupling with electromagnetic clutch, which releases the sprocket (10)
10) Sprocket.
11) Transmission toothed belt.
12) Counterweight of the pendulum swing arm (optional).
13) Brake disc, integral with the reducer housing (3).
14) Brake caliper integral with the pendulum swing arm (6).
15) Housing support of the reducer that attaches it to the suspension.

16) Articulated suspension arm or fork.
17) Suspension damper.
18) Elastic stops for angular displacement of the arm.
19) Pendulum assembly (6+8+9+10+11+optionally 12).

Figure 2 .- Shows an example of application of the drive wheel assembly according to the invention, the drive wheel assembly propelling a three-wheeled bus.

## PREFERRED EMBODIMENT OF INVENTION

Following the numbering reflected in the figures, a preferred embodiment of the invention will be dimensioned, to be applied to a city bus with the following requirements:

| | |
|---|---|
| - Maximum speed | 55 km/h |
| - Maximum slope to overcome | 6% |
| - Acceleration 0-30 km/h | 8 seconds (s) |
| - Vehicle weight without load | 5,000 kg |
| - Max. number of passengers | 50 |
| - Max. weight in motion | 8,800 kg |
| - Number of drive wheels | one |
| - Drive wheel diameter | 2m |

From these requirements, the power and torque to be applied to the shaft (4) of the wheel (1) to overcome a 6% slope equivalent to an angle of L= 3.43° will be calculated.

Force to be applied on the periphery of the wheel:

Fp=M x g x sin = 5,165N that applied on a radius R=1m means having on the shaft (4) a torque of 5165Nm.
Max. torque to be applied to the wheel shaft (4) to overcome the slope 5,165Nm

To roll at 55 km/h = 15.28 m/s the wheel would be have to rotate at: 15.28 x 60/x 2= 145.9 rpm

To maintain this speed on flat ground, the rolling and aerodynamic forces must be overcome, which are calculated from the respective coefficients: Kr = 0.006 Kd = 0.6 with the projected area in the direction of travel being $2.5 \times 3 = 7.5 \ m^2$.

Rolling forces Fr = M x g x Kr

$$Fr = 8,800 \times 9,81 \times 0.006 = 518 \ N$$

Aerodynamic forces Fa = 1/(areax d air x $V^2$ x Kd)

$$Fa = 1/(7.5 \times 1.23 \times 15.28^2 \times 0.6) = 646 \ N$$

Therefore, the power required to travel on flat ground at 55 km/h will be:

$$kW = Fr + Fa) \ Vm /1000 = (518 + 546) \times 15.28 / 1000 = 17.8 \ kW$$

Taking into account performance losses in power transmission:

| | |
|---|---|
| Epicyclic reducer performance (3) | 96% |
| Pendulum transmission performance (6) | 97% |
| Total performance = 0,96 x 0,97 = | 0.93 |

Therefore, the power required to be delivered by the motor will be = 17.8 / 0.93 = 19.14 kW

Required  motor power (8) to travel at 55 km/h = 10.14 kW

To accelerate from 0 to 30 km/h = 8.33 m/s in 8 seconds, the vehicle must be supplied with energy of :

$$E = 1 / m \times V^2 = 1/x 8{,}800 \times 8.33^2 = 305{,}311 \text{ Joules}$$

Requiring a power to accelerate the vehicle in 8 seconds of:

$$kW = 305{,}311 / 8 \times 1000 = 38{,}16 \text{ kW}$$

To this power must be added the power required to overcome the rolling and aerodynamic resistances at this speed (8.33 m/s) as follows:

$$kW \text{ rolling} = Kr \times 8{,}800 \times 8.33^2 = 3.66 \text{ kW}$$

$$kW \text{ aerodynamic} = 1/ (7.5 \times 1.23 \times 8.33^2 \times 0.6) = 0.19 \text{ kW}$$

Therefore, the power required to accelerate the vehicle to 30 km/h in 8 seconds will be the sum of the three powers:

$$kW = 38.16 + 3.66 + 0.19 = 42.01 \text{ kW}$$

Power to accelerate from 0-30 km/h in 8 seconds = 42.01
Once the maximum torque requirements on the shaft (4) of the wheel (1) to overcome the 6% slope and the maximum power are determined, the most suitable pendulum transmission and motor (8) shall be dimensioned, bearing in mind that the torque must be compensated by the torque of the pendulum assembly (19) in the 90° position.
Analysing the motor market, a motor capable of delivering at least 42 kW at 3,600 rpm, capable of delivering a constant torque at the shaft (4) of the wheel (1) of 5,165 Nm sufficient to overcome a 6% slope, will be sought.
The total transmission ratio between motor (8) and wheel (1) will be:

$$i = 3{,}600 / 145.9 = 24.67$$

This total transmission ratio (24.67) shall be distributed between the reducer (3) and the pendulum transmission (19) as appropriate.
Therefore, the torque demanded from the sprocket (10) of the transmission, taking into account an overall performance of 0.92, will be:

$$5{,}165 / 24.67 \times 0.93 = 225 \text{ Nm}$$

Therefore, the motor (8) will require a mechanical power on its shaft, capable of providing a torque of 225 Nm at 3,600 rpm, so its power will be at least:

$$kW = 225 \times 3{,}600 / 9.55 = 84{,}8 \text{ kW}$$

This power will improve the acceleration phase performance of the vehicle by accelerating it in: 305,311 / (85-(3.66-0.2))x 1,000 = 3,76 seconds.
This torque on the sprocket (10) of 225 Nm must be compensated by the moment generated by the angular displacement of the pendulum assembly (19), up to the horizontal. As it has a pendulum arm (6) of 0.7m the wight of the pendulum assembly (19) shall be at least 225 / 07 = 321 kg. In this way, in order to overcome a 6% slope, the pendulum assembly (19) will be raised to the horizontal, compensating with its weight the torque transmitted by the sprocket (10).
Selecting a synchronous permanent magnet motor (8) of 85 kW, which with a nominal consumption of 158 A at 400V, is capable of delivering a constant torque of 225 Nm at 3,600 rpm, with a weight of 168 kg. It will be necessary to supplement with additional counterweights (12) up to the 321 kg required to balance the torque with the pendulum assembly (19).
Thus, the pendulum assembly (19) will compensate with its angular displacement up to 90°, the torque provided to the input shaft (5), in order to achieve through the reducer (3) increase the torque on the output shaft (4) that drives the wheel.
When it comes to recovering the braking energy, the pendulum assembly (19) will be raised, in the opposite direction to the direction of travel, when the motor (8) acts as a generator, describing an angle of up to 120°, raising the pendulum assembly (19) up to 1m in height and retaining it, in that position, by activating the brake calipers (14) on the fixed disc (13) accumulating:

$$M \times g \times h = 321 \times 9.81 \times 1 = 3,150 \text{ Joules}$$

Energy which by simultaneously deactivating the brake and starting, will be added to that of the motor (8) to facilitate starting the vehicle.

This is an important aid to the motor (8) in the starting phase, which comes from a mechanical accumulation of a part of the braking energy.

INDUSTRIAL APPLICABILITY

The invention is industrially applicable. The assembly can be manufactured using standard mechanical components and processes and implemented as a drive wheel assembly in series production of road vehicles. In vehicles operated with frequent stop-and-go duty cycles, it enables lower peak starting torque and reduced energy consumption.

Having sufficiently described the nature of the present invention, as well as the way of putting it into practice, it is not considered necessary to explain it further so that any person skilled in the art may understand its scope and the advantages deriving therefrom, it being noted that, within its essentiality, it may be put into practice in other embodiments which differ in detail from that indicated by way of example. The invention, however, is defined by the appended claim.

**Claims**

1. **A drive wheel assembly for a vehicle,** comprising:

   - an epicyclic reducer (3) having a housing (15) and coaxially arranged shafts comprising an input shaft (5) and an output shaft (4)
   - a wheel (1) fixed to the output shaft (4) of the reducer (3); and
   - a housing support (15) adapted for attachment to a suspension member (17);

   **characterised in that** the drive wheel assembly further comprises a pendulum assembly (19) including:

   - a swing arm (6) articulated with respect to the housing (15) about a pivot axis coincident with the input shaft (5), by means of a bearing (7) arranged on a coaxial stub shaft;
   - a motor (8) fixed at an end of the swing arm (6); and
   - a mechanical transmission (11; 9, 10), selected from a toothed belt transmission, a chain transmission or gears, which drivingly couples the motor (8) to the input shaft (5) of the reducer (3); and **in that** the drive wheel assembly further comprises:
   - a brake disc (13) integral with the housing (15) of the reducer (3); and
   - brake calipers (14) mounted on the swing arm (6) and configured to act on the brake disc (13) so as to selectively hold the pendulum assembly (19) in an elevated position under a resistive braking torque, in particular a braking torque originating from engine braking of the motor (8), and to release the pendulum assembly (19), such that a descent of the pendulum assembly (19) transfers, through the reducer (3), at least part of stored potential energy to assist vehicle starting.

**Patentansprüche**

1. **Antriebsradanordnung für ein Fahrzeug,** umfassend:

   - ein Planetengetriebe (3) mit einem Gehäuse (15) und koaxial angeordneten Wellen, bestehend aus einer Eingangswelle (5) und einer Ausgangswelle (4);
   - ein Rad (1), das an der Ausgangswelle (4) des Getriebes (3) befestigt ist; und
   - einen Gehäuseträger (15), der zur Befestigung an einem Aufhängungselement (17) ausgelegt ist;
   **gekennzeichnet dadurch, dass** die Antriebsradanordnung ferner eine Pendelanordnung (19) umfasst, die enthält:

- einen Schwenkarm (6), der bezüglich des Gehäuses (15) um eine Drehachse gelenkig gelagert ist, die mit der Eingangswelle (5) zusammenfällt, mittels eines Lagers (7) auf einem koaxialen Wellenstummel;
- einen Motor (8), der an einem Ende des Schwenkarms (6) befestigt ist; und
- eine mechanische Übertragung (11; 9, 10), ausgewählt aus einer Zahnriemenübertragung, einer Kettenübertragung oder Zahnrädern, die den Motor (8) treibend mit der Eingangswelle (5) des Getriebes (3) koppelt;

und **dadurch, dass** die Antriebsradanordnung ferner umfasst:

- eine Bremsscheibe (13), die fest mit dem Gehäuse (15) des Getriebes (3) verbunden ist; und - Bremszangen (14), die am Schwenkarm (6) angebracht und so ausgelegt sind, dass sie auf die Bremsscheibe (13) wirken, um die Pendelanordnung (19) selektiv in einer angehobenen Position unter einem widerstehenden Bremsdrehmoment, insbesondere einem Bremsdrehmoment aus der Motorbremse des Motors (8), zu halten und die Pendelanordnung (19) freizugeben, sodass ein Absenken der Pendelanordnung (19) über das Getriebe (3) mindestens einen Teil der gespeicherten potenziellen Energie überträgt, um das Anfahren des Fahrzeugs zu unterstützen.

**Revendications**

1. **Ensemble roue motrice pour un véhicule,** comprenant :

- un réducteur épicycloïdal (3) ayant un carter (15) et des arbres disposés coaxialement comprenant un arbre d'entrée (5) et un arbre de sortie (4) ;
- une roue (1) fixée à l'arbre de sortie (4) du réducteur (3) ; et
- un support de carter (15) adapté pour être fixé à un élément de suspension (17) ;
**caractérisé en ce que** l'ensemble roue motrice comprend en outre un ensemble pendulaire (19) incluant :

- un bras oscillant (6) articulé par rapport au carter (15) autour d'un axe de pivot coïncidant avec l'arbre d'entrée (5), au moyen d'un palier (7) disposé sur un tronçon d'arbre coaxial ;
- un moteur (8) fixé à une extrémité du bras oscillant (6) ; et
- une transmission mécanique (11 ; 9, 10), choisie parmi une transmission par courroie dentée, une transmission par chaîne ou des engrenages, qui couple en entraînement le moteur (8) à l'arbre d'entrée (5) du réducteur (3) ;

et **en ce que** l'ensemble roue motrice comprend en outre :

- un disque de frein (13) solidaire du carter (15) du réducteur (3) ; et
- des étriers de frein (14) montés sur le bras oscillant (6) et configurés pour agir sur le disque de frein (13) de manière à maintenir sélectivement l'ensemble pendulaire (19) dans une position élevée sous un couple de freinage résistif, en particulier un couple de freinage provenant du freinage moteur du moteur (8), et pour libérer l'ensemble pendulaire (19), de sorte qu'une descente de l'ensemble pendulaire (19) transfère, par l'intermédiaire du réducteur (3), au moins une partie de l'énergie potentielle stockée pour assister au démarrage du véhicule.

Figure 1

Figure 2

8

**REFERENCES CITED IN THE DESCRIPTION**

**Patent documents cited in the description**

- FR 2071264 A5, Pernin
- US 20120248850 A1, Hirano

- US 20110232984 A1, Wurm